# EUROPEAN PATENT APPLICATION

(11) **EP 4 701 044 A1**
(43) Date of publication of application: **25.02.2026**
(21) Application number: 24196084.8
(22) Date of filing: 23.08.2024
(51) Int. Cl.: H02J 50/12, H02J 50/80, H04B 5/79

(54) **WIRELESS POWER TRANSFER**

(71) Applicant: Koninklijke Philips N.V., 5656 AG Eindhoven (NL)
(72) Inventor: NEERHOF, Gerben Willem, 5656 AG Eindhoven (NL); DRAAK, Johannes Wilhelmus, 5656 AG Eindhoven (NL); STEUNEBRINK, Tim Patrick, 5656AG Eindhoven (NL); LULOFS, Klaas Jakob, 5656 AG Eindhoven (NL)
(74) Representative: Philips Intellectual Property & Standards

(57) **Abstract**

A wireless power transmitter (101) providing wireless power to a power receiver comprises an output circuit (103, 203) comprising a power transfer coil (103) arranged to generate an electromagnetic power transfer signal in response to a drive signal being provided to the output circuit (103, 203). A driver (201) generates the drive signal for the output circuit (103, 203) to generate the electromagnetic power transfer signal. A communication circuit (207, 209) communicates with the power receiver (105), in some cases using the power transfer signal and in other cases using a communication carrier. A controller (211) is arranged to switch-off all generation of electromagnetic signals during first time intervals in response to receiving a request from the power receiver for reduced EMI time intervals. The power receiver may synchronize measurements or e.g. communication with other devices to occur during the time intervals with reduced EMI.

## Description

### FIELD OF THE INVENTION

The invention relates to wireless power transfer and in particular, but not exclusively, to wireless power transfer systems operating in accordance with elements of the Qi or Ki wireless power transfer Specifications.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined. This approach allows power transmitter devices that meet the Qi Specifications to be used with power receiver devices that also meet the Qi Specifications without these having to be from the same manufacturer or having to be dedicated to each other. The Wireless Power Consortium has proceeded to develop the Ki Specification (also known as the Cordless Kitchen Specification) which is aimed at providing safe, reliable, and efficient wireless power transfer to high power devices such as kitchen appliances. Ki supports much higher power levels than Qi, and indeed power levels up to 2.5KW are supported.

However, although such power transfer systems may provide advantageous power transfer in many scenarios and for many applications, there also tends to be some disadvantages in some situations. For example, in order to transfer sufficient power levels, a high electromagnetic field strength is often required which may result in a disadvantageous electromagnetic environment. This may affect electronic circuitry or functionality resulting in degraded or possibly even faulty operation.

Hence, an improved wireless power transfer approach would be advantageous, and in particular, an approach allowing increased flexibility, reduced cost, reduced complexity, improved power transfer operation, an improved electromagnetic environment, improved interoperability, improved support for different functions and operations and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a wireless power transmitter for wirelessly providing power to a power receiver via an electromagnetic power transfer signal, the wireless power transmitter comprising: an output circuit comprising a power transfer coil arranged to generate the electromagnetic power transfer signal in response to a drive signal being provided to the output circuit; a driver arranged to generate the drive signal for the output circuit to generate the electromagnetic power transfer signal; a communication circuit arranged to communicate with the power receiver; and a controller arranged to switch-off all generation of electromagnetic signals during first time intervals in response to receiving a request from the power receiver for reduced EMI (ElectroMagnetic Interference) time intervals.

The invention may allow improved performance and/or facilitated operation in many wireless power transfer systems. It may allow improved power transfer in many embodiments. In many cases, the approach may support improved and/or new and/or additional functionality. For example it may allow improved measurements to be performed at the power receiver side. Measurements that are sensitive to EMI may e.g. be performed during first time intervals thereby allowing more accurate measurements. As another example, the approach may allow, facilitate, and/or improve communication from the power receiver to other devices by reducing interference to such devices.

The approach allows for advantageous operation where the operation can be efficiently adapted to the specific capabilities of the power receiver and the power transmitter. The power receiver and power transmitter may both retain some control and input on the generation of first time intervals where no electromagnetic signals are generated, and may allow a dynamic and flexible adaptation to the properties, capabilities, and functionality of the devices, including e.g. the desired application and use provided by the power receiver.

The communication circuit may be arranged to communicate with the power receiver using an electromagnetic communication carrier (signal). Switching off all generation of electromagnetic signals includes switching off the generation of the drive signal/power transfer signal. The switching off all generation of electromagnetic signals includes switching off any electromagnetic communication carrier (signal) that may be generated.

A duration of the first time intervals may be in the range of 0.5-50msec, and typically in the range of 1-10msec. The communication circuit may be arranged to communicate from the power receiver to the power transmitter using load modulation (of the power transfer signal and/or dedicated communication signal). The communication circuit may be arranged to communicate from the power transmitter to the power receiver using amplitude, frequency, and/or phase modulation (of the power transfer signal and/or dedicated communication signal).

The request from the power receiver for reduced EMI time intervals may be a request for the power transmitter to generate time intervals with reduced levels of the electromagnetic interference/fields generated by the power transmitter.

The controller may be arranged to switch-off all generation of electromagnetic fields (specifically from any coils of the power transmitter) during first time intervals in response to receiving a request from the power receiver for reduced EMI time intervals.

In accordance with an optional feature of the invention, the communication circuit comprises: a communication coil arranged to generate a communication carrier signal in response to a communication drive signal being provided to the communication coil, a communication driver arranged to generate the communication drive signal, and a load modulation receiver circuit arranged to receive load modulation of the communication carrier signal by the power receiver; and the controller is arranged to switch off both the drive signal and the communication drive signal during the first time intervals.

This may provide particularly advantageous operation in many embodiments and scenarios.

In accordance with an optional feature of the invention, the driver is arranged to, during a power transfer phase, generate the drive signal to employ a repeating time frame comprising at least a power transfer time interval and a communication time interval, the driver being arranged to not generate the drive signal during communication time intervals and the communication driver being arranged to not generate the communication drive signal during power time intervals; and wherein the controller is arranged to generate the first time intervals as selected communication time intervals.

This may provide particularly advantageous operation in many embodiments and scenarios.

In accordance with an optional feature of the invention, the driver is arranged to, during a power transfer phase, generate the drive signal to employ a repeating time frame comprising at least a power transfer time interval and a communication time interval, the driver being arranged to not generate the drive signal during communication time intervals and the communication driver being arranged to not generate the communication drive signal during power time intervals; and wherein the controller is arranged to generate the first time intervals as parts of selected communication time intervals.

This may provide particularly advantageous operation in many embodiments and scenarios.

In accordance with an optional feature of the invention, the driver is arranged to, during a power transfer phase, generate the drive signal to employ a repeating time frame comprising at least a power transfer time interval and a communication time interval, the driver being arranged to not generate the drive signal during communication time intervals and the communication driver being arranged to not generate the communication drive signal during power time intervals; and wherein the controller is arranged to generate the first time intervals as at least part of selected power time intervals.

This may provide particularly advantageous operation in many embodiments and scenarios.

In accordance with an optional feature of the invention, the driver is arranged to generate the first time intervals during a connected phase where no drive signal is generated and during which the communication drive signal is continuously generated outside the first time intervals.

This may provide particularly advantageous operation in many embodiments and scenarios.

In accordance with an optional feature of the invention, the driver is arranged to generate the first time intervals during a power transfer phase.

This may provide particularly advantageous operation in many embodiments and scenarios.

In accordance with an optional feature of the invention, the request comprises a request for a (requested) property of the first timing intervals, and the controller is arranged to generate the first time intervals in dependence on the (requested) property, the (requested) property being at least one of: a timing property; a duration; and a repetition frequency.

This may provide particularly advantageous operation in many embodiments and scenarios.

In accordance with an optional feature of the invention, the communication circuit is arranged to transmit a confirmation message to the power receiver, the confirmation message comprising an indication that the first time intervals will be generated.

This may provide particularly advantageous operation in many embodiments and scenarios. The confirmation message may indicate a property of the first time intervals, such as a timing, duration, and /or repetition frequency of the first time intervals.

In accordance with an optional feature of the invention, the communication circuit is arranged to transmit a capability message to the power receiver, the capability message comprising an indication of the power transmitter being capable of generating reduced EMI time intervals if requested.

This may provide particularly advantageous operation in many embodiments and scenarios.

In accordance with an optional feature of the invention, the power transmitter is further arranged to generate an electromagnetic test signal for detecting a presence of foreign objects during a foreign object detection time interval, and the controller is arranged to switch-off the electromagnetic test signal during the first time intervals.

This may provide particularly advantageous operation in many embodiments and scenarios.

In accordance with another aspect of the invention, there is provided a power receiver for wirelessly receiving power from a power transmitter via an inductive power transfer signal, the power receiver comprising: an input circuit comprising a receiver coil arranged to extract power from the power transfer signal; a power path coupling the input circuit to a load to provide power extracted from the power transfer signal to the load; a first communication circuit arranged to communicate data with the power transmitter, the communicator being arranged to transmit a request for reduced EMI time intervals to the power transmitter, reduced EMI time intervals being time intervals during which no electromagnetic signal is generated by the power transmitter.

In accordance with an optional feature of the invention, the power receiver further comprises a measurement circuit arranged to perform a measurement, the measurement circuit being arranged to synchronize the measurement to reduced EMI time intervals generated by the power transmitter.

This may provide particularly advantageous operation in many embodiments and scenarios.

In some embodiments, the power receiver further comprises a user input circuit arranged to determine a user input in response to measurements of a capacitive touch display; the user input circuit being arranged to synchronize the measurements to reduced EMI time intervals generated by the power transmitter.

In accordance with an optional feature of the invention, the power receiver further comprises a second communication circuit arranged to communicate over a communication channel formed with a device not being the power transmitter; and the second communication circuit is arranged to synchronize the communication over the communication channel during reduced EMI time intervals generated by the power transmitter.

This may provide particularly advantageous operation in many embodiments and scenarios.

In accordance with another aspect of the invention, there is provided a method of operation for a wireless power transmitter wirelessly providing power to a power receiver via an electromagnetic power transfer signal, the wireless power transmitter comprising: an output circuit comprising a power transfer coil arranged to generate the electromagnetic power transfer signal in response to a drive signal being provided to the output circuit; and the method comprises: generating the drive signal for the output circuit to generate the electromagnetic power transfer signal; communicating with the power receiver; and switching-off all generation of electromagnetic signals during first time intervals in response to receiving a request from the power receiver for reduced EMI time intervals.

In accordance with another aspect of the invention, there is provided a method of operation for a power receiver wirelessly receiving power from a power transmitter via an inductive power transfer signal, the power receiver comprising: an input circuit comprising a receiver coil extracting power from the power transfer signal; a power path coupling the input circuit to a load to provide power extracted from the power transfer signal to the load; and the method comprises: communicating data with the power transmitter, including transmitting a request for reduced EMI time intervals to the power transmitter, reduced EMI time intervals being time intervals during which no electromagnetic signal is generated by the power transmitter.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of a half bridge inverter for a power transmitter;
FIG. 4 illustrates an example of a full bridge inverter for a power transmitter;
FIG. 5 illustrates an example of elements of a power receiver in accordance with some embodiments of the invention;
FIG. 6 illustrates an example of a communication carrier signal during a connected phase for a wireless power transfer system in accordance with some embodiments of the invention;
FIG. 7 illustrates an example of a repeating time frame for a wireless power transfer system in accordance with some embodiments of the invention;
FIG. 8 illustrates an example of a power transfer signal and a communication carrier for a wireless power transfer system; and
FIG. 9 illustrates an example of a power transfer signal and a communication carrier for a wireless power transfer system in accordance with some embodiments of the invention.

### DETAILED DESCRIPTION OF THE EMBODIMENTS

The following description focuses on embodiments of the invention applicable to a high power wireless power transfer system utilizing a power transfer approach such as known from the Qi or Ki Specifications. However, it will be appreciated that the invention is not limited to this application but may be applied to many other wireless power transfer systems.

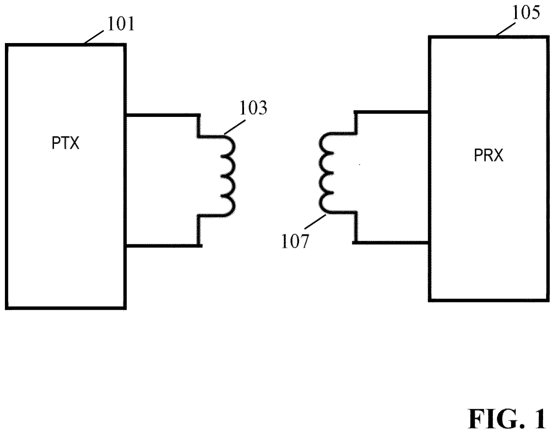

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and in many practical systems may be around 20-75 kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

In the following, the operation of the power transmitter 101 and the power receiver 105 will be described with specific reference to an embodiment generally in accordance with the Qi or Ki Specifications (except for the herein described (or consequential) modifications and enhancements). Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power (or voltage or current) can be measured, and a desired power level can be determined. The power receiver may calculate and send a new setpoint value to the power transmitter which may in response change the power level of the power transfer signal. Accordingly, the combination of the power receiver and power transmitter may form a power control loop that adapts operation to provide the load of the power receiver with the appropriate power level.

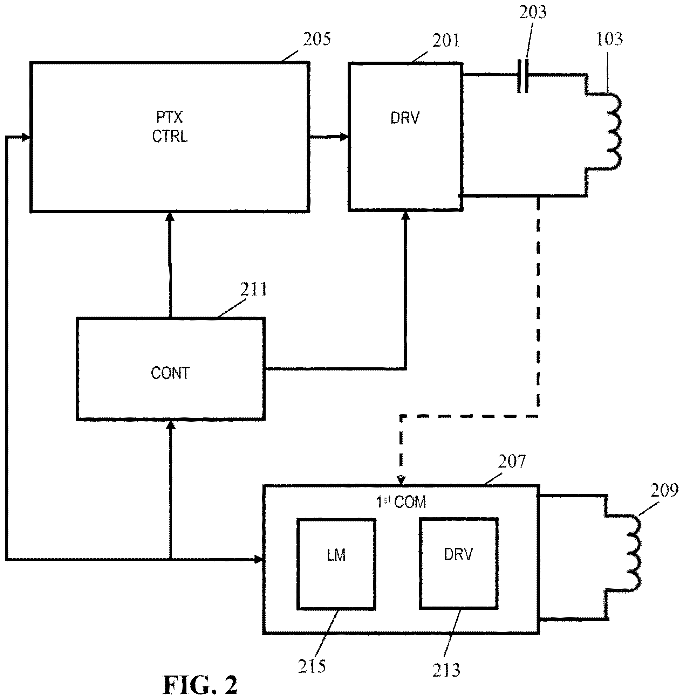

FIG. 2 illustrates elements of the power transmitter 101 of FIG. 1 in more detail.

The power transmitter 101 includes a driver 201 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 203. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

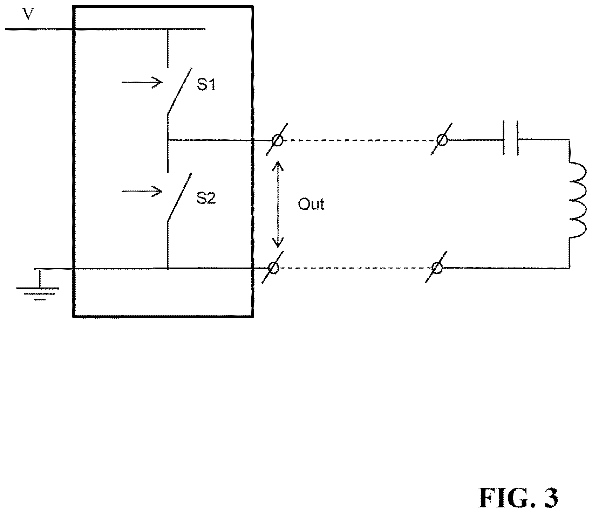

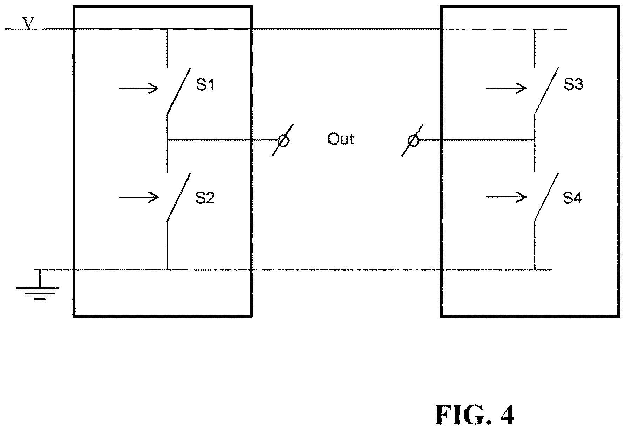

The driver 201 generates the current and voltage which is fed to the output resonance circuit and thus to the transmitter coil 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 205 which is arranged to control the operation of the power transmitter 101 in accordance with the desired operating principles. Specifically, the power transmitter 101 may include many of the functionalities required to perform power control in accordance with the Qi or Ki Specification.

In the example of the power transmitter of FIG. 2, the power transmitter 101 comprises a power transmitter communicator 207 which is arranged to receive data and messages from the power receiver 105 as well as transmit data and messages to the power receiver 105 (as will be appreciated by the skilled person, a data message may provide one or more bits of information).

In some embodiments, the communication is performed by modulation of a communication carrier signal that is generated by a first communication coil 209. The power transmitter communicator 207 is coupled to the first communication coil 209 and comprises a communication driver 213 arranged to generate a communication drive signal which is fed to the first communication coil 209 to generate the communication carrier. The power transmitter communicator 207 may typically be arranged to generate the communication drive signal/communication carrier signal to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz.

The power transmitter communicator 207 may be arranged to modulate the communication drive signal/ communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

For communication from the power receiver to the power transmitter, the modulation of the communication carrier may be a load modulation. The power receiver may be arranged to modulate the communication carrier by varying a loading of the communication carrier generated by the communication coil 209 in accordance with the data to be transmitted. The power transmitter communicator 207 specifically comprise a load modulation receiver circuit 215 arranged to sense variations in the voltage and/or current of the communication coil 207 and to demodulate the load modulation based on these. In typical embodiments, the power transmitter communicator 207 may for example receive data from the power receiver and forward it to the power transmitter controller 205 for controlling the power transfer signal etc.

In some embodiments, the communication may be in accordance with the Near Field Communication, NFC, Specifications and the power receiver may specifically include NFC functionality. In these embodiments, the power transmitter communicator 207 and the first communication coil 209 may implement (at least) the functionality of an NFC reader. Thus, in some embodiments, the communication drive signal/ communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

In some embodiments, such as for example for Qi wireless power transfer systems, the communication between the power receiver and the power transmitter may use in-band communication where the communication is achieved by modulation of the power transfer signal. In such cases, the communication from the power receiver to the power transmitter may be by load modulation of the power transfer signal and communication from the power transmitter to the power receiver may be by amplitude, frequency, or phase modulation of the power transfer signal. Specifically, the communication schemes may be implemented as specified for a Qi wireless power transfer system, includimng e.g. using spread spectrum techniques.

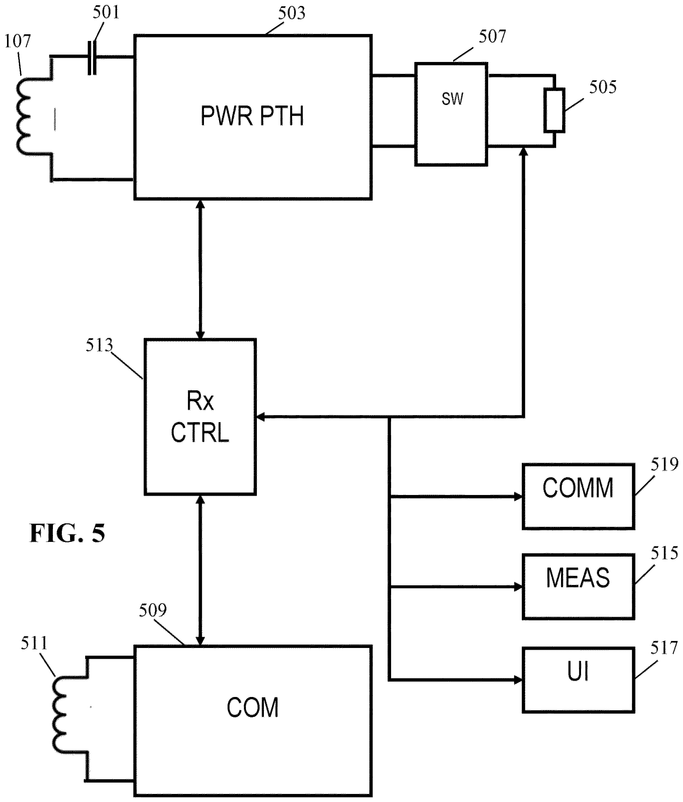

FIG. 5 illustrates some exemplary elements of the power receiver 105.

The power receiver 105 comprises an input circuit 107, 501 which is arranged to extract power from the power transfer signal to generate an induced power signal. The input circuit includes a receiver coil 107 arranged to extract power from the power transfer signal by induction, i.e. the magnetic field of the power transfer signal induces a signal in the receiver coil. In the example, the receiver coil 107 is coupled to a capacitor 501 which together with the receiver coil 107 forms an input resonance circuit. Thus, the input circuit may be a resonance circuit and the power transfer may be a resonant power transfer between resonance circuits. In other embodiments, only one, or none, of the power receiver and the power transmitter may utilize a resonance circuit for power transfer.

The input circuit is coupled to a power path 503 which comprises an input that is coupled to the input circuit 107, 501 and which receives the induced power signal. The induced power signal is an AC signal (corresponding to the electromagnetic power transfer signal).

The power path 503 couples the receiver coil 107 to a load 505 via a switch 507. The power path 503 includes a power control path which converts the power extracted by the receiver coil 107 into a suitable supply for the load 505.

The load 505 represents the target load for the power transfer. The load 505 may for example be an external device, a battery or charging function, etc. The load 505 may also represent the loading by internal circuitry, such as control, support, and auxiliary circuits supporting the power transfer.

It will be appreciated that although FIG. 5 illustrates the switch 507 as directly switching in or out the load itself, switching may be performed at other positions in the power path, such as at the input to the power path, before or after rectification, etc. It will also be appreciated that in many embodiments the power path may not include any switching whatsoever and that the load may be constantly coupled to the power path (and e.g. requiring constantly provision of power).

In some embodiments, the power path 503 may provide a direct power path connecting the input resonance circuit to the switch 507 or load 505. In some power receivers, the power path may simply be a direct connection formed by two wires. However, in other power receivers, the power path may include an energy storage which typically may store energy over relatively short time periods. In many power receivers, the power path may include a rectifier. Such a rectifier may convert an induced AC signal to a (typically varying) DC signal. Such a rectifier may e.g. by a bridge or a single rectifier providing a half-wave rectified or full-wave rectified. In some power receivers, the power path may in addition to the rectifier include an energy storage such as specifically one or more smoothing capacitors which provide a more smoothed (less variation) DC signal. In other power receivers, the power path may include more complex functions, such as e.g. voltage control circuitry, impedance matching circuitry, current control circuitry etc. Similarly, it will be appreciated that the switch 507 may only be present in some embodiments and that in some embodiments the load 505 may permanently be coupled to the input resonance circuit.

The power receiver 105 comprises a power receiver communicator 509 and a power receiver communication coil 511. The power receiver communication coil 511 is arranged to couple to the power transmitter communication coil 209 and thus the communication carrier signal induces a current (or at least an electromotive force) in the power receiver communication coil 511.

The power receiver communicator 509 is coupled to the power receiver communication coil 511 and is arranged to determine amplitude variations in the induced signal and to demodulate amplitude modulations of the communication carrier signal. Thus, the power receiver communicator 509 is arranged to decode data transmitted from the power transmitter by amplitude modulation of the communication carrier signal. It will be appreciated that in other embodiments, the power receiver communicator 509 may be arranged to decode data modulated onto the communication carrier signal using other modulation formats such as frequency or phase modulation.

The power receiver communicator 509 is further arranged to load modulate the communication carrier signal in order to transmit data from the power receiver to the power transmitter. Specifically, the power receiver communicator 509 may comprise a load (such as a capacitor) which depending on the data to transmit can be switched between being coupled to the power receiver communication coil 511 and not being coupled to the power receiver communication coil 511. These load modulations may then be detected by the first communicator 207 of the power transmitter.

In the specific example, the power receiver communication coil 511 and the power receiver communicator 509 may provide NFC compatible communication operation. Specifically, the power receiver communication coil 511 may be arranged to provide functionality corresponding to an NFC tag and to decode data that has been ASK modulated onto the communication carrier signal in accordance with the NFC specifications.

Thus, the power receiver communicator 509 is arranged to transmit data to the power transmitter by varying the loading of the power receiver communication coil 511 in response to data to be transmitted to the power transmitter 101. The load variations are then detected and demodulated by the power transmitter 101 as will be known to the person skilled in the art.

In the example, the power receiver communicator 509 is furthermore arranged to demodulate amplitude, frequency, and/or phase modulation of the communication carrier signal in order to retrieve data transmitted from the power transmitter.

As mentioned, in some embodiments, such as for example for Qi wireless power transfer systems, the communication between the power receiver and the power transmitter employs in-band communication. Thus, in some embodiments, the power receiver communicator 509 is arranged to demodulate amplitude, frequency, and/or phase modulation of the power transfer signal in order to retrieve data transmitted from the power transmitter. Correspondingly, the power receiver communicator 509 is arranged to load modulate the power transfer signal in order to transmit data to the power transmitter.

The power receiver further comprises a power receiver controller 513 which performs various power receiver controller functionality required to perform power transfer, and in particular functions required to perform power transfer in accordance with the Qi or Ki Specifications.

In the described system, the power receiver 105 includes functionality for transmitting request messages to the power transmitter where the request messages include a request for reduced EMI time intervals. The power receiver 105, and specifically the power receiver controller 513, may for example identify a need to perform a function, such as performing a delicate measurement, that may be negatively impacted by the presence of an electromagnetic field. It may proceed to transmit a request for the power transmitter to generate a time interval in which EMI to the power receiver is reduced.

The power transmitter 101 comprises a controller 211 which in response to receiving the request from the power receiver for reduced EMI time intervals is arranged to control the power transmitter to introduce time intervals during which the generation of electromagnetic fields/shields are switched off. In particular, the controller 211 may control the power transmitter to switch-off the generation of the drive signal to switch off the electromagnetic power transfer signal, and to switch off any communication carrier, during such time intervals, which henceforth will be referred to as first time intervals or silent time intervals. During silent time intervals, the controller 211 may also switch off the generation of any other electromagnetic signal being generated, such as test signals used e.g. for foreign object detection.

Thus, in the approach, the power receiver and power transmitter may interact to generate silent time intervals in which the power transmitter switches off any signal that is used to generate an electromagnetic field, and in particular the signals provided to the power transfer coil and any other antenna coil is switched off. The approach accordingly allows for generation of low EMI "silent" time intervals during which the power receiver can perform delicate or sensitive operations that are sensitive to such interference, such as for example making sensitive measurements. Further, the approach ensures that the power receiver has control of /impact on the generation of the silent time intervals. The approach may put the initiative with the power receiver and allow this to control the silent time intervals such that these can be generated to provide the required conditions. It is an approach that allows the system to adapt to the specific requirements and properties of the specific power receiver and the desired operation. At the same time, it allows the power transmitter to retain control and adapt to the requested operation within the properties, parameters, and constraints imposed by the power transmitter and its operating conditions.

In many embodiments, the approach may be used to generate silent time intervals during a connected phase. A connected phase may for example occur if a power receiver and power transmitter has interworked to be ready to perform power transfer but before power transfer actually occurs. For example, a kettle may be placed on a wireless power transmitter but with the kettle being in a standby state ready for being switched on. Such a connected phase may potentially be sustained for a substantial amount of time.

During a connected phase, the power transmitter may be arranged to not generate a power transfer signal and thus no power transfer using the power transfer signal is performed. However, the power receiver may be arranged to extract small amounts of power from the communication carrier. For example, small amounts of power may be extracted from an NFC carrier generated by the power transmitter communicator 207. Such power extraction may support functionality for supporting the connected phase, such as the necessary circuitry for operating a user interface and maintaining the connected state in readiness for activating a power transfer.

In the connected phase, the communication carrier, such as specifically the NFC carrier, may continuously be generated in order to facilitate the extraction of power from the communication carrier. In some such embodiments, the level of the communication carrier may be kept constant throughout the connected phase but in many embodiments, the power level may be varied. In particular, the power level may be increased during communication time slots in order to allow more reliable communication, and specifically to allow improved detection of load modulation. The signal level may in between communication slots be reduced in order to provide an improved trade-off between the power drain for the power transmitter and the power levels that can be extracted by the power receiver.

During a connected phase, the power receiver and the power transmitter may communicate, and the power receiver may in particular transmit a request for reduced EMI time intervals. In response, the power transmitter may proceed to introduce silent time intervals in which not only is the power transfer signal switched off, but the controller 211 is further arranged to switch off the communication carrier. Thus, during the silent time intervals of the connected phase, the power transmitter will stop generating any electromagnetic signal/field.

The controller 211 may be arranged to generate such silent time intervals e.g. by not generating any communication carrier during one of the communication time intervals or possibly only during part of such communication time intervals. Alternatively or additionally, the controller 211 may be arranged to generate such silent time intervals during the time between the communication time intervals.

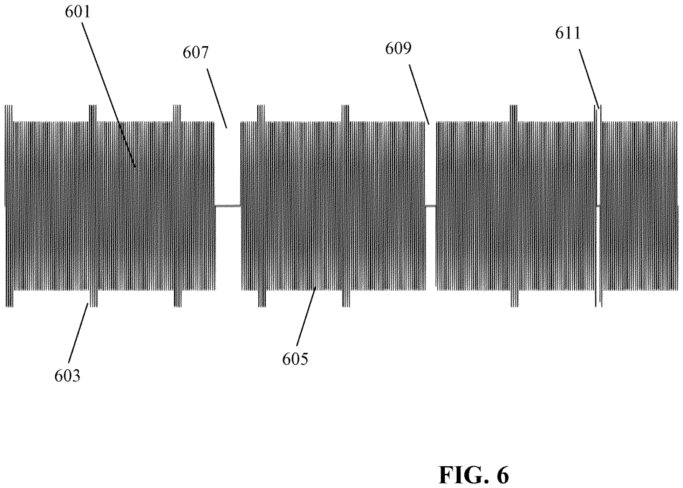

An example of a communication carrier 601 which includes communication time intervals 603 and power intervals 605. FIG. 6 further shows examples of silent time intervals 607, 609, 611 generated during power time interval, as a full communication time interval, or as part of a communication time interval respectively.

Thus, during a connected mode/phase, the power transmitter may in response proceed to switch off the NFC carrier (as well as other magnetic fields, such as e.g. electromagnetic test fields/signals, such as for foreign objection detection) for a short period of time. This will create an agreed-upon moment of reduced interference in between communication slots by the NFC carrier (no power field yet) e.g. to allow a sensor to be read or measurement be made.

In some embodiments, controller 211 may alternatively or additionally be arranged to generate the silent time intervals during a power transfer phase in which the power transfer signal is active in order to transfer power to the power receiver.

The system may employ a repeating time frame during the power transfer phase where the time frame comprises at least one power transfer time interval and at least one communication time interval. In many embodiments, the power transmitter may thus be arranged to generate the power transfer signal to employ a repeating time frame during the power transfer phase.

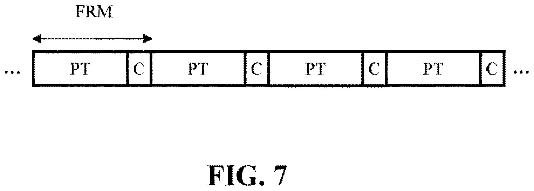

An example of such a repeating time frame is illustrated in FIG. 7 where power transfer time intervals are indicated by PT and communication time intervals are indicated by C. In the example, each time frame FRM comprises only one communication time interval and one power transfer time interval. However, it will be appreciated that in other embodiments, other time intervals may also be included in a time frame, or a plurality of communication time intervals and/or power transfer time intervals may be included in each time frame.

The power transfer driver 201 is controlled by the power transmitter controller 205 to only generate a drive signal with full power during the power transfer time intervals and to reduce power substantially, and typically switching off the power transfer signal, during the communication time intervals. Thus, in many embodiments, the driver 201 generates the drive signal and thus the power transfer signal during the power transfer time intervals, whereas the drive signal and thus the power transfer signal is switched off during the communication time intervals.

In the power transfer phase, the power transmitter is thus arranged to perform power transfer during the power transfer time interval of the time frames of the power transfer phase. Specifically, during these time intervals, the power transmitter and the power receiver may operate a power control loop (the power control loop may be based on communication within communication time intervals corresponding to repeating time intervals). Thus, the level of the power being transferred may be dynamically varied.

In the communication time intervals of the time frames of the power transfer phase, the power drive signal is however substantially reduced and typically switched off and thus no (or a reduced power level) power transfer signal is generated during the communication time intervals.

The communication between the power transmitter and the power receiver is during the power transfer phase performed in the communication time intervals, and typically is only performed in the communication time intervals. The communication via the first communication coil 209 and the second communication coil 511 is only performed in the communication time intervals, and specifically the modulation of the communication carrier occurs only in the communication time intervals.

In the system, the first communicator 207 is accordingly arranged to only transmit data, and thus to only (e.g. amplitude) modulate the communication carrier signal, during the communication time intervals. Likewise, it will typically only seek to demodulate data during the communication time intervals.

Similarly, the second communicator 509 is arranged to only communicate during communication time intervals when in the power transfer phase. In the system, the second communicator 509 is accordingly arranged to only transmit data, and thus to only load modulate the communication carrier signal, during the communication time intervals. Likewise, it will typically only seek to demodulate data during the communication time intervals.

Thus, during the power transfer phase, the first communicator 205 and the second communicator 511 are arranged to only communicate during the communication time intervals. Such an approach may provide highly advantageous performance and in particular has been found to provide much improved communication performance. In particular, the approach reduces interference to the communication operation from the power transfer signal thereby providing a more reliable and robust communication with reduced bit errors.

In the approach, the first communicator 205 is accordingly arranged to drive the communication coil 209 to generate the communication carrier during the communication time intervals of the power transfer phase.

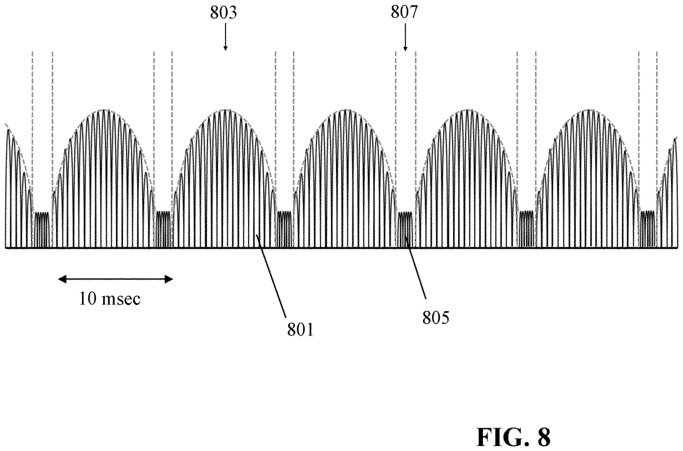

In many embodiments, the power driver 201 may be supplied by a time varying supply signal. In particular, the supply voltage to the output stage may be generated from an AC voltage, such as specifically from an AC mains voltage. The AC voltage may in some embodiments directly be used as a supply voltage to the output circuit (e.g. inverter) of the power driver 201. In many embodiments, the supply voltage may alternatively be generated as a rectified mains voltage. Thus, in many embodiments, the (absolute) supply voltage varies as a (possibly rectified) sine wave with a given period. As a result, the generated power transfer drive signal has a (sine wave) time varying amplitude as also shown in FIG. 8. The amplitude has minimums (typically zero value) corresponding to the zero crossings of the input supply voltage and specifically to the main. Thus, the power transfer drive signal/ power transfer signal is generated to have a period of the amplitude of half the period of the AC mains signal.

In such embodiments, the repeating time frame, and accordingly the power transfer time interval and communication time intervals, may be synchronized to the varying power supply signal and thus to the timing of the amplitude variations of the power transfer drive signal. In particular, the communication time intervals may be arranged to be at (include) the minimums of the amplitude (corresponding to the zero crossings of the mains signal).

Likewise, the communication driver 209 is arranged to generate the communication carrier signal to be synchronized to the varying power supply signal, and specifically it may be activated around the minima of the power supply.

Thus, in many embodiments, the repeating time frame, the power transfer time intervals, and the communication time intervals are (specifically in the power transmitter) synchronized to the time varying power supply signal, and specifically to the mains supply.

An example of how communication in communication time intervals of a repeating time frame could be performed in such an approach is shown in FIG. 8 which shows the power transfer signal 801 being generated during the power transfer time intervals 803 and the modulated communication carrier signal 805 being generated during the communication time intervals 807.

In many embodiments, the power receiver may be arranged to request silent time intervals before, or typically during, a power transfer phase with the power transmitter in response proceeding to generate such silent time intervals during the power transfer phase.

In some embodiments, the controller 211 is arranged to generate the first time intervals as selected communication time intervals. The controller 211 may specifically select some communication time intervals, say every 2^{nd}, 3^{rd}, 4^{th} etc communication time interval, during which no communication carrier is generated, and thus during which neither a communication carrier nor a power transfer signal is generated. The controller 211 may specifically disable the NFC carrier for one or more communication slots.

This may provide a robust, well defined, and low complexity approach for generating EMI silent time intervals. It may typically result in a negligible impact on the power transfer itself. However, it may impact the communication performance and may constrain the freedom in selecting the time and durations for the silent time intervals. It is typically not possible to skip all slots, and indeed some communication and communication time intervals are mandatory in many power transfer systems such as in the Ki specifications.

In some embodiments, the controller 211 may be arranged to generate the silent time intervals to extend only for part of the communication time intervals. This may in many applications allow some communication to be performed even during communication time intervals used for silent time intervals and may for example allow mandatory communication to still be supported while at the same time allowing silent time intervals to be generated for measurements etc. However, it may allow only shorter silent time intervals to be generated which may be insufficient in some applications. In some cases, it may also be insufficient to support sufficient communication during the part of the communication time interval which is not allocated to the silent time interval.

In the specific example of e.g. a Ki implementation, the controller 211 may disable the NFC carrier for a part of a communication slot. Choosing to disable the NFC carrier for only part of a communication time intervals offers more freedom in the frequency and occurrence of such silent time intervals and allows (limited) communication to still occur in a slot that is partly silent. A downside is that the durations of the silent time intervals will be restricted in duration.

In many embodiments, the controller 211 is arranged to generate the silent time intervals as at least part of selected power time intervals. In some embodiments, the controller 211 may be arranged to generate silent time intervals as entire power transfer time intervals. However, in most embodiments, the communication time intervals may be generated as only part of a power transfer time interval.

In many embodiments, generating the silent time intervals during the power transfer time intervals may provide improved performance. In particular, it may typically allow silent time intervals of substantially longer duration. In many cases, the reduction in power transfer may be relatively negligible and can be compensated by the power control loop. Further, using the power transfer time intervals may reduce the impact on communication which may in many cases be more critical. However, in some embodiments, switching-off the drive signal/inverters may be more difficult than switching off a low power communication carrier. In many embodiments, switching effects may be more significant for a high level power transfer signal than for a low level communication carrier.

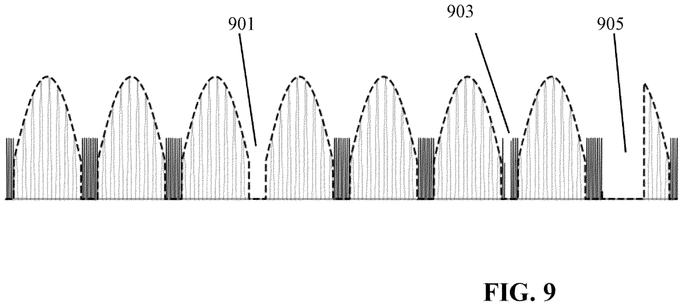

FIG. 9 illustrates examples of silent time intervals 901, 903, 905 being a full communication time interval, part of a communication time interval, and part of a power transfer time interval respectively.

The power receiver may accordingly request and control the generation of silent time intervals. These silent time intervals may be used to perform actions that are particularly sensitive to the presence of electromagnetic fields and interference.

For example, in many embodiments, the power receiver may include functionality for performing measurements, and specifically it may be arranged to synchronize a measurement to occur during a silent time interval.

For example, the power receiver may be a measurement device using a sensor with a very low level output signal (e.g. in the µV or mV range). Such weak measurement signals may result in the measurement circuit 515 (and often the sensor itself) being very sensitive to EMI and noise introduced therefrom. Accordingly, the power receiver may proceed to request that (e.g. repeated) silent time intervals with reduced EMI are introduced by the power transmitter, and it may then perform the measurement (e.g. sampling the sensor output) during the silent time intervals.

In some embodiments, the power receiver may be a device which comprises a user input circuit 517 which is arranged to determine user inputs from measurements of a capacitive touch display. The Inventors have realized that reliability of measurements of such a capacitive touch display is substantially degraded in the presence of EMI. The inventors have further realized that this may be addressed by the power receiver requesting silent time intervals from the power transmitter and by synchronizing the measurements of the capacitive touch display to the silent time intervals.

In particular, sensors that measure a change in capacitance like touchscreens, touch buttons or several types of temperature sensors can often generate incorrect or inaccurate measurements due to interference present from an NFC carrier (communication carrier) or fields caused by wireless power transfer. This can cause issues in sensor performance, like failed / incorrect measurements, or phantom touches on a (capacitive) touchscreen. Accordingly, devices using such sensors often include substantial shielding which is costly, heavy and generally inconvenient. The described approach allows for such sensors and measurements to be made more accurately and reliably without typically adding cost and additional hardware to the power transmitter or power receiver. The described approach may allow a cheaper alternative to preventing or reducing interference and allows for more temporal freedom or regular interval setting to read the sensor and provide accurate results.

In some embodiments, the power receiver comprises a second communication circuit 519 which is arranged to communicate over a wireless communication channel formed with another device than the power receiver. For example, the power receiver may itself comprise an NFC communicator/reader which is arranged to communicate with a third device. For example, the power receiver device may include an NFC reader for reading smartcards or similar entities.

In such cases, the presence of strong EMI may impact the communication over the wireless communication channel and possibly even prevent communication from being possible, especially if the same frequencies are used (e.g. of both the power receiver to power transmitter and the power receiver to third device communications employ NFC communication).

In such cases, the second communication circuit 519 may be arranged to request and then synchronize the communication over the wireless communication channel to the silent time intervals. In particular, the second communication circuit 519 may be arranged to time communications to take place only during the silent time intervals. For example, an NFC reader may be synchronized to only read an external smartcard during silent time intervals.

The described approach may enable or substantially improve such communications with third devices.

In many embodiments, the request for reduced EMI intervals from the power receiver may include a requested feature of the silent time intervals. In particular, the request may include a request for a preferred value for a timing, a duration; and/or a repetition frequency of the communication time intervals.

For example, based on the measurements desired to be performed by the power receiver, the request message may indicate a (minimum) duration and a (minimum) repetition frequency. This may for example be selected to be sufficient for making the measurements as desired. For example, for a capacitive touch display, it may be known that measurements should be performed over a duration of a minimum if, say, 0.2 msec in order to get accurate results. It may further be determined that the capacitive touch display should be read every, say, 100 msec in order to provide a sufficiently fast user response.

Accordingly, the request may include a preference of the silent time intervals having a duration of a minimum of, say, 1 msec and that they are repeated with a frequency not less than, say, 20 Hz. Another power receiver may for example perform temperature measurements which require a measurement over say 1 msec but are only performed once per second. In that case, the power receiver may transmit a request message indicating a preference for a minimum duration of 2 msec and a minimum frequency of 2Hz.

Thus, the request message may allow the silent time intervals to be adapted and targeted to the specific requirements and features of the power receiver being supported. It may reduce the impact of generating the silent time intervals as these can be limited to the minimum required for supporting the specific operation.

In some embodiments, the start and/or stop times of the silent time intervals may by the power receiver be detected by measuring the outputs of the power receiver coil 107 and the power receiver communication coil 511 and detecting the silent time intervals as the ones where the signal levels of both of these are below respective thresholds.

In some embodiments, the request message may include a specific request for the timing of the silent time intervals, such as for example that they are at the start or end of a power transfer time interval and/or communication time interval. This may in many cases facilitate the determination of when the silent time intervals occur thereby facilitating the synchronization of the measurements and communication.

The power transmitter may be arranged to transmit a confirmation message to the power receiver where the confirmation message comprises an indication that the silent time intervals will be generated. The power receiver may then proceed to operate in accordance with whether the silent time intervals can be provided or not by the power transmitter. If the power transmitter indicates that the silent time intervals can be provided, the power receiver may proceed to synchronize and adapt measurements to the silent time intervals. If no confirmation message is received (or a negative confirmation message is received indicating that the request cannot be met), the power receiver may for example proceed to not perform any measurements or to adapt how these are made. For example, a lower measurement rate but with an increased averaging time may be applied to compensate for the increased EMI.

The confirmation message may include data that indicates selected parameters of the silent time intervals, such as for example indicating a duration, repetition frequency, and/or timing of the silent time intervals. The power receiver may then proceed to adapt the operation, and specifically measurement operations, to the indicated parameters. Specifically, a measurement frequency and averaging time may be adapted to fit the measurements to be performed within the silent time intervals.

In some embodiments, the power transmitter may be arranged to transmit a capability message to the power receiver where the capability message includes an indication of the power transmitter being capable of generating reduced EMI time intervals if requested.

The capability message may typically be transmitted during an initialization phase when the power receiver is first detected by a power transmitter. In particular, the capability message may be transmitted during an identification, configuration, or negotiation phase. The power receiver may proceed to adapt the operation dependent on the capability of the power transmitter and may adapt to the different capabilities of different power transmitters.

In some cases, the capability message may be transmitted in response to a request from the power receiver and/or may be a message also describing a number of other capabilities of the power transmitter.

In many embodiments, the capability message may also include data describing more details of the capability of generating silent time intervals, such as a range for parameters, e.g. a possible range for a repetition frequency and/or a duration of the silent time intervals. In such cases, the power receiver may be arranged to adapt the request for reduced EMI time intervals to have properties within the given range of operating parameters. It may also adapt the operation performed during the silent time intervals. For example, the measurement may be adapted to only extend to a duration that does not exceed the maximum duration of the silent time intervals which can be supported by the power transmitter.

In many embodiments, the power transmitter may be arranged to perform foreign object detection by generating a dedicated electromagnetic test signal and detecting whether the loading of the electromagnetic test signal exceeds a threshold indicative of a foreign object being present. Such an electromagnetic test signal may for example be generated by a separate test coil or may in some cases be generated by the communication coil (or possibly even the transmitter coil). Also, in some cases, foreign object detection, and the generation of the electromagnetic test signal, may specifically be generated during the communication time intervals or during dedicated foreign object detection time intervals.

The controller 211 may in such cases be arranged to not only switch off the power transfer signal and the communication carrier during communication time intervals but it may also switch-off the electromagnetic test signal. Thus, the foreign object detection tests may be disabled during communication time intervals in order not to generate any electromagnetic signal/field and thus to reduce the EMI cause to the power receiver from the power transmitter.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A wireless power transmitter (101) for wirelessly providing power to a power receiver (105) via an electromagnetic power transfer signal, the wireless power transmitter comprising:
an output circuit (103, 203) comprising a power transfer coil (103) arranged to generate the electromagnetic power transfer signal in response to a drive signal being provided to the output circuit (103, 203);
a driver (201) arranged to generate the drive signal for the output circuit (103, 203) to generate the electromagnetic power transfer signal;
a communication circuit (207, 209) arranged to communicate with the power receiver (105); and
a controller (211) arranged to switch-off all generation of electromagnetic signals during first time intervals in response to receiving a request from the power receiver for reduced EMI time intervals.

2. The power transmitter of claim 1 wherein the communication circuit (207) comprises:
a communication coil (209) arranged to generate a communication carrier signal in response to a communication drive signal being provided to the communication coil (207),
a communication driver (213) arranged to generate the communication drive signal, and
a load modulation receiver circuit (215) arranged to receive load modulation of the communication carrier signal by the power receiver; and the controller (211) is arranged to switch off both the drive signal and the communication drive signal during the first time intervals.

3. The power transmitter of claim 2 wherein the driver (201) is arranged to, during a power transfer phase, generate the drive signal to employ a repeating time frame comprising at least a power transfer time interval and a communication time interval, the driver (201) being arranged to not generate the drive signal during communication time intervals and the communication driver (213) being arranged to not generate the communication drive signal during power time intervals; and wherein the controller (211) is arranged to generate the first time intervals as selected communication time intervals.

4. The power transmitter of claim 2 wherein the driver (201) is arranged to, during a power transfer phase, generate the drive signal to employ a repeating time frame comprising at least a power transfer time interval and a communication time interval, the driver (201) being arranged to not generate the drive signal during communication time intervals and the communication driver (213) being arranged to not generate the communication drive signal during power time intervals; and wherein the controller (211) is arranged to generate the first time intervals as parts of selected communication time intervals.

5. The power transmitter of claim 2 wherein the driver (201) is arranged to, during a power transfer phase, generate the drive signal to employ a repeating time frame comprising at least a power transfer time interval and a communication time interval, the driver (201) being arranged to not generate the drive signal during communication time intervals and the communication driver (213) being arranged to not generate the communication drive signal during power time intervals; and wherein the controller (211) is arranged to generate the first time intervals as at least part of selected power time intervals.

6. The power transmitter of any of claims 2-5 wherein the driver (201) is arranged to generate the first time intervals during a connected phase where no drive signal is generated and during which the communication drive signal is continuously generated outside the first time intervals.

7. The power transmitter of any previous claims wherein the driver (201) is arranged to generate the first time intervals during a power transfer phase.

8. The power transmitter of any previous claim wherein the request comprises a request for a requested property of the first timing intervals, and the controller is arranged to generate the first time intervals in dependence on the requested property, the requested property being at least one of:
a timing property;
a duration; and
a repetition frequency.

9. The power transmitter of any previous claim wherein the communication circuit (207) is arranged to transmit a confirmation message to the power receiver, the confirmation message comprising an indication that the first time intervals will be generated.

10. The power transmitter of any previous claim wherein the communication circuit (207) is arranged to transmit a capability message to the power receiver (105), the capability message comprising an indication of the power transmitter (101) being capable of generating reduced EMI time intervals if requested.

11. The power transmitter of any previous claim further arranged to generate an electromagnetic test signal for detecting a presence of foreign objects during a foreign object detection time interval, and the controller (201) is arranged to switch-off the electromagnetic test signal during the first time intervals.

12. A power receiver for wirelessly receiving power from a power transmitter via an inductive power transfer signal, the power receiver (105) comprising:
an input circuit (107, 501) comprising a receiver coil (107) arranged to extract power from the power transfer signal;
a power path (503) coupling the input circuit (107, 501) to a load (505) to provide power extracted from the power transfer signal to the load (505);
a first communication circuit (509,511) arranged to communicate data with the power transmitter, the communicator (509,511) being arranged to transmit a request for reduced EMI time intervals to the power transmitter, reduced EMI time intervals being time intervals during which no electromagnetic signal is generated by the power transmitter.

13. The power receiver of claim 11 further comprising a measurement circuit (515) arranged to perform a measurement, the measurement circuit (515) being arranged to synchronize the measurement to reduced EMI time intervals generated by the power transmitter.

14. The power receiver of claim 11 further comprising a second communication circuit (519) arranged to communicate over a wireless communication channel formed with a device not being the power transmitter; and the second communication circuit (519) is arranged to synchronize the communication over the wireless communication channel to reduced EMI time intervals generated by the power transmitter.

15. A method of operation for a wireless power transmitter (101) wirelessly providing power to a power receiver (105) via an electromagnetic power transfer signal, the wireless power transmitter comprising:
an output circuit (103, 203) comprising a power transfer coil (103) arranged to generate the electromagnetic power transfer signal in response to a drive signal being provided to the output circuit (103, 203); and the method comprises:
generating the drive signal for the output circuit (103, 203) to generate the electromagnetic power transfer signal;
communicating with the power receiver (105); and
switching-off all generation of electromagnetic signals during first time intervals in response to receiving a request from the power receiver for reduced EMI time intervals.

16. A method of operation for a power receiver wirelessly receiving power from a power transmitter via an inductive power transfer signal, the power receiver (105) comprising:
an input circuit (107, 501) comprising a receiver coil (107) extracting power from the power transfer signal;
a power path (503) coupling the input circuit (107, 501) to a load (505) to provide power extracted from the power transfer signal to the load (505); and the method comprises:
communicating data with the power transmitter, including transmitting a request for reduced EMI time intervals to the power transmitter, reduced EMI time intervals being time intervals during which no electromagnetic signal is generated by the power transmitter.
